Europäisches Patentamt

European Patent Office

Office européen des brevets

(19)

(11) Veröffentlichungsnummer : **0 065 116**
**B1**

(12) **EUROPÄISCHE PATENTSCHRIFT**

(45) Veröffentlichungstag der Patentschrift :
04.03.87

(51) Int. Cl.⁴ : **B 60 N 1/00**

(21) Anmeldenummer : **82103345.3**

(22) Anmeldetag : **21.04.82**

(54) **Fahrzeugsitz.**

(30) Priorität : **15.05.81 DE 3119399**

(43) Veröffentlichungstag der Anmeldung :
**24.11.82 Patentblatt 82/47**

(45) Bekanntmachung des Hinweises auf die Patenterteilung : **04.03.87 Patentblatt 87/10**

(84) Benannte Vertragsstaaten :
**FR GB IT**

(56) Entgegenhaltungen :
**DE-A- 1 900 079**
**DE-A- 2 400 794**
**DE-A- 2 751 110**
**US-A- 2 097 976**
**US-A- 2 371 407**
**US-A- 2 720 914**

(73) Patentinhaber : **KEIPER RECARO GMBH & CO.**
**Stuttgarter Strasse 73**
**D-7312 Kirchheim/Teck (DE)**

(72) Erfinder : **Treiber, Horst**
**Eichenparkstrasse 7**
**D-7000 Stuttgart (DE)**

(74) Vertreter : **Patentanwälte Phys. Bartels Dipl.-Ing. Fink**
**Dr.-Ing. Heid**
**Lange Strasse 51**
**D-7000 Stuttgart 1 (DE)**

## Beschreibung

Die Erfindung betrifft einen Fahrzeugsitz, welcher die Merkmale des Oberbegriffs des Anspruches 1 aufweist.

Bei einem bekannten Fahrzeugsitz dieser Art (US-A-27 20 914) bestehen sämtliche Holme aus je zwei miteinander verbundenen Blechschalen, die je einen Hohlprofilstab mit zwei von diesem nach außen abstehenden, sich über die gesamte Stablänge erstreckenden Leisten bilden, wobei diese Leisten aus den aneinander anliegenden und miteinander verbundenen Randzonen der beiden Blechschalen bestehen. Derartige Holme lassen zwar ein günstiges Verhältnis zwischen Gewicht und Belastbarkeit erreichen. Sie sind jedoch relativ aufwendig und ihre Leisten können in einem Crash-Fall zumindest dann den Sitzbenutzer gefährden, wenn sie gegen die Bewegungsrichtung des Sitzbenutzers relativ zum Rahmen gerichtet sind, wie dies bei den Leisten des vorderen Querholmes der Fall ist, welche nach oben bzw. gegen den hinteren Querholm weisen.

Der Erfindung liegt die Aufgabe zugrunde, einen Fahrzeugsitz zu schaffen, der es ermöglicht, mit vermindertem Aufwand die erforderliche hohe Stabilität bei minimalen Gewicht zu erreichen und außerdem mit möglichst geringem Aufwand einen ausreichenden Tauchschutz für die Polsterung zu bieten.

Diese Aufgabe löst ein Fahrzeugsitz mit den Merkmalen des Patentanspruches 1.

Ein kreiszylindrisches Rohr als hinterer Querholm ist kostengünstiger als ein aus Blechschalen gebildeter Hohlprofilstab und für die von diesem Querholm aufzunehmenden Beanspruchungen ebenso günstig hinsichtlich des Verhältnisses von Stabilität und Gewicht wir ein aus Schalen gebildeter Hohlkasten. Hinzu kommt, daß ein solches Rohr als Lagerzapfen für eine schwenkbare Rückenlehne dienen kann, was ebenfalls Einsparungen an Gewicht und Kosten ermöglicht. Durch die Gestaltung des vorderen Querholms als ein aus einer einzigen, nach oben gewölbten Blechplatte gebildetes Blechteil lassen sich die Kosten ohne eine Verschlechterung des Verhältnisses zwischen Stabilität und Gewicht reduzieren. Da ein solches Blechteil keine abstehenden Leisten benötigt, ist es ferner ohne Schutzabdeckungen und dergleichen geeignet, einen Tauchschutz für die Polsterung im Crash-Fall zu bilden. Dieser Tauchschutz ist besonders effektiv, wenn der rückwärtige Teil der den vorderen Querholm bildenden Blechplatte eine nach hinten und unten geneigte Auflagefläche für den zugehörigen Polsterträger bildet.

Weitere vorteilhafte Ausgestaltungsmöglichkeiten der einzelnen Teile des Sitzrahmens sind Gegenstand der Patentansprüche 3-9.

Die Erfindung wird nachfolgend anhand eines in der Zeichnung dargestellten Ausführungsbeispiels im einzelnen erläutert.

Es zeigen:
Figur 1 eine abgebrochen gezeichnete Draufsicht auf den zum Sitzteil gehörenden Teil des Sitzrahmens eines Ausführungsbeispiels des Fahrzeugsitzes;
Figur 2 und 3 eine Seitenansicht bzw. eine Vorderansicht des in Fig. 1 gezeigten Teils des Sitzrahmens;
Figur 4 eine auseinandergezogen und teils abgebrochen gezeichnete, perspektivische Ansicht der beiden Schalen eines Längsholms und eines Teils des als Formteil aus Blech ausgebildeten Querholms des Sitzrahmens und
Figur 5 bis 7 teils abgebrochen gezeichnete und gegenüber Fig. 1 in größerem Maßstab dargestellte Schnitte längs der Linien V-V bzw. VI-VI bzw. VII-VII von Fig. 1.

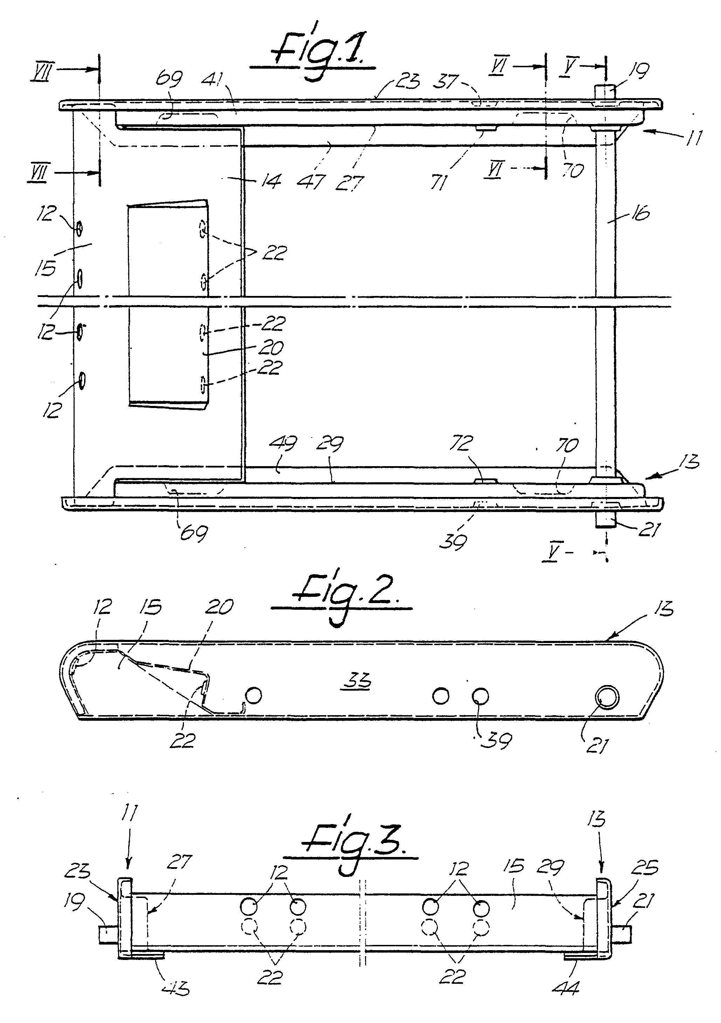

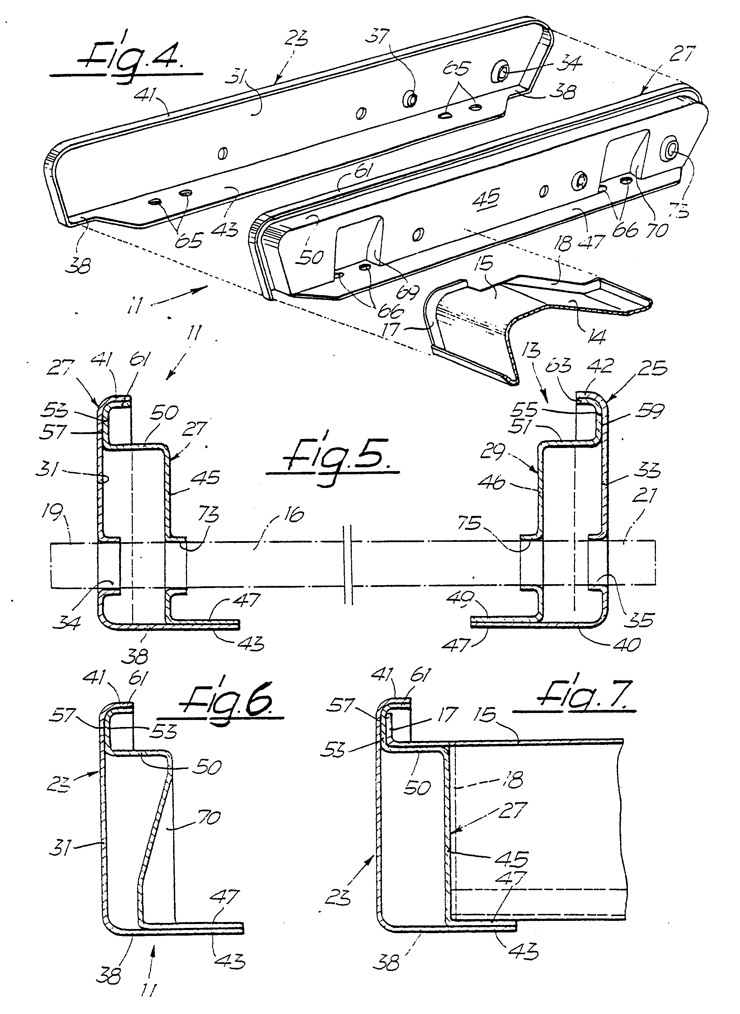

In den Zeichnungen zeigen die Fig. 1 bis 3 einen Teil des Sitzrahmens eines Kraftfahrzeugsitzes in zusammengebautem Zustand, und zwar den dem Sitzteil zugeordneten Teil des Sitzrahmens. Der der Rückenlehne zugeordnete Rahmenteil ist nicht dargestellt. Der dargestellte Teil des Sitzrahmens weist zwei parallel zueinander in Sitzlängsrichtung verlaufende Längsholme 11 und 13 auf, die über einen vorderen Querholm und einen hinteren Querholm miteinander verbunden und zueinander spiegelbildlich ausgebildet sind. Der vordere Querholm ist, wie am besten aus Fig. 1, 4 und 7 zu ersehen ist, als aus Blech gepreßtes Formteil 15 ausgebildet, das mit seitlichen, hochgestellten Rändern 17, 18 (Fig. 4 und 7) mit den Längsholmen 11 und 13 verschweißt ist. Der hintere Querholm ist in Form eines Verbindungsrohres 16 ausgebildet, das an seinen Rohrenden 19 und 21 mit den Längsholmen 11 bzw. 13 verschweißt ist. Die Rohrenden 19 und 21 durchgreifen die Längsholme 11 bzw. 13, wobei nach außen überstehende Rohrstummel gebildet werden.

Wie am deutlichsten aus den Fig. 4 bis 7 zu ersehen ist, sind die Längsholme aus je einer Außenschale 23, 25 und je einer Innenschale 27, 29 gebildet, wobei die Außenschalen 23 und 25 zueinander spiegelbildlich ausgebildet sind, wie dies auch bei den Innenschalen 27 und 29 der Fall ist. Die Außenschalen 23, 25 weisen als Schalenboden eine im wesentlichen ebene Wandung 31 bzw. 33 auf, die mit ihrer Außenseite oder Rückseite die in einer Vertikalebene liegende, äußere Breitseite des betreffenden Längsholms 11 bzw. 13 bildet. Die Wandungen 31, 33 der Außenschalen 23 bzw. 25 sind von mehreren Bohrungen durchbrochen, von denen die dem hinteren Ende benachbarten Bohrungen 34 bzw. 35 für den Durchtritt der Rohrenden 19 bzw. 21 dienen. Zu den Bohrungen 34, 35 in den Wandungen 31 bzw. 33 nach vorn versetzte Bohrungen 37 bzw. 39 dienen als Lagerung für nicht eingezeichnete Stell- und/oder Betätigungseinrichtungen eines nicht dargestellten Gelenkbeschlags der ebenfalls nicht eingezeichneten Rückenlehne, die mit den überstehenden Rohrenden 19 und 21 des Verbindungsrohres 16 verriegelbar ist.

Die den Schalenboden der Außenschalen 23, 25 bildenden Wandungen 31 bzw. 33 sind an den beiden Schmalseiten und an der oberen Breitseite von einem nach einwärts abgebogenen, durchgehenden Rand 41 bzw. 42 eingefaßt, der beim dargestellten Ausführungsbeispiel rechtwinklig abgebogen ist. Wie insbesondere die Fig. 4 für die Außenschale 23 erkennen läßt, geht dieser Rand 41, 42 an seinen unteren Enden in einen unteren Rand über, der bei der Außenschale 23 mit 38 und bei der Außenschale 25 mit 40 bezeichnet ist. Die Ränder 38 und 40 sind auf einem Großteil der Länge der Unterseite nach einwärts verbreitert, so daß horizontal verlaufende, breite Befestigungsleisten 43, 44 gebildet werden.

Die Innenschalen 27 und 29 der Längsholme 11 bzw. 13 weisen als Schalenboden ebenfalls eine im wesentlichen ebene Wandung auf, die bei der Innenschale 27 mit 45 und bei der Innenschale 29 mit 46 bezeichnet ist. Bei zusammengebautem Längsholm bilden diese Wandungen 45 und 46 die inneren Breitseiten der Längsholme 11 und 13. Die Wandungen 45 und 46 sind, wie es auch bei den Außenschalen 23, 25 der Fall ist, von abgebogenen Rändern eingefaßt, und zwar an der Unterseite von einem rechtwinklig nach einwärts abgebogenen Rand, der bei der Innenschale 27 mit 47 und bei der Innenschale 29 mit 49 bezeichnet ist. Bei aus beiden Schalen zusammengesetztem Längsholm liegen die Ränder 47 und 49 auf dem die Befestigungsleisten 43 bzw. 44 bildenden Teil der unteren Ränder 38 bzw. 40 der zugehörigen Außenschalen 23 bzw. 25 bündig auf, wie am besten aus Fig. 5 zu ersehen ist. An den übrigen Seiten des Schalenbodens der Innenschalen 27, 29 ist der die Wandung 45 bzw. 46 einfassende Rand 50 bzw. 51 nach der entgegengesetzten Seite hin abgebogen, also gegen die zugeordnete Außenschale 23 bzw. 25 hin. Dieser Rand 50 bzw. 51 der Innenschalen 27 und 29 weist einen nach einwärts zurückgebogenen Endbereich in Form eines nach einwärts offenen U-Profils 53 bzw. 55 auf. In zusammengebautem Zustand liegt das U-Profil 53, 55 mit der Außenseite seines Stegs 57 bzw. 59 an der Innenseite der Wandung 31 bzw. 33 des Schalenbodens der Außenschale 23 bzw. 25 an, während der äußere Schenkel 61 bzw. 63 des U-Profils 53 bzw. 55 mit seiner Außenseite an der Innenseite des benachbarten Randes 41, 42 der zugeordneten Außenschale 23 bzw. 25 anliegt. Die Schalen sind längs der Berührungsflächen ihrer Ränder, beim Ausführungsbeispiel durch Punktschweißen, fest miteinander verbunden.

Wie Fig. 4 zeigt, sind in den Befestigungsleisten 43 und 44 sowie in den auf diesen als Verstärkung aufliegenden Rändern 47 und 49 der Innenschalen 27 bzw. 29 Befestigungslöcher 65, 66 vorgesehen, die bei zusammengebautem Längsholm miteinander fluchten und mittels denen die Längsholme über eine Zwischeneinheit (Konsole oder dergleichen) mit dem Fahrzeugboden verbindbar sind. Wie am deutlichsten aus Fig. 4 hervorgeht, sind im Zugangsbereich der Befestigungslöcher an den Innenschalen 27 und 29 Mulden 69 und 70 vorgesehen, die von der Rückseite des Schalenbodens der Innenschale her eingedrückt sind und Vertiefungen bilden, die den freien Zugang zu den Löchern 66 ermöglichen. Im Schalenboden der Innenschalen 27 und 29 sind außerdem mit den Bohrungen 37 und 39 fluchtende Bohrungen 71 bzw. 72 vorgesehen, die an jedem Längsholm 11 und 13 eine durchgehende Lagerung für den bereits erwähnten, für die Betätigung der Rückenlehne vorgesehenen Mechanismus bilden. Außerdem ist in der Wandung 45 bzw. 46 jeder Innenschale 27 und 29 eine Bohrung 73 bzw. 75 für den Durchtritt des Verbindungsrohres 16 vorgesehen.

Das als vorderer Querholm vorgesehene Formteil 15 ist, wie den Fig. 1, 2 und 4 zu entnehmen ist, als gewölbte, von Längsholm zu Längsholm durchgehende Blechplatte gestaltet. Diese bildet in ihrem rückwärtigen Teil eine nach hinten geneigt verlaufende Auflagefläche 14 für den zugehörigen Teil des nicht gezeigten Polsterträgers, wobei die Auflagefläche 14 durch ihre Neigung als Tauchschutz wirkt, der bei einem Aufprall das Wegtauchen des Polsterträgers nach vorn und abwärts verhindert. Im zentralen Bereich ist aus der Auflagefläche 14 eine stufenförmige Auswölbung 20 nach oben ausgeformt. Diese Auswölbung weist in ihrer rückwärtigen Wandung vier Bohrungen 22 auf. Diese bilden zusammen mit entsprechenden Bohrungen 12 im vorderen Stirnflächenbereich des Formteils 15 vier gleiche, in Fahrzeuglängsrichtung verlaufende Führungen, in denen Tragstäbe längsverschiebbar gelagert sind. Diese Stäbe, die nicht dargestellt sind, tragen in an sich bekannter Weise einstellbare Vorderteile des im Bereich seines vorderen Endes geteilt und einstellbar ausgebildeten Sitzteils. Durch Verschieben der Stäbe in den durch die Bohrungen 12 und 22 gebildeten Führungen und Verrasten der Stäbe in gewünschter Lage kann jedes Vorderteil als Unterlage für je einen Unterschenkel des Benutzers gesondert eingestellt werden, was u. a. beispielsweise bei einem orthopädischen Sitz vorteilhaft ist.

Die Anbringung des vorderen Querholms an den Längsholmen 11 und 13 ist am deutlichsten aus den Fig. 4 und 7 zu ersehen. Wie Fig. 7 zeigt, liegt der vordere hochgestellte Rand 17 des Formteils 15 an der Innenfläche des Stegs 57, 59 des U-Profils 53 bzw. 55 der Innenschale 27 bzw. 29 des zugeordneten Längsholms an, wo er durch Verschweißen befestigt ist. Der gegenüber dem Rand 17 nach einwärts versetzte, weiter rückwärts gelegene Rand 18 liegt an der Wandung 45 bzw. 46 des Schalenbodens der Innenschale 27 bzw. 29 des zugeordneten Längsholms an und ist dort durch Verschweißen befestigt.

Die durch die Ausbildung der Längsholme als Hohlkastenprofil erreichte Verbesserung der Stabilität des Sitzrahmens wird bei dem hier beschriebenen, speziellen Ausführungsbeispiel noch durch die gezeigte Ausbildung und Anbringung des den vorderen Querholm bildenden Formteils 15 zusätzlich verbessert. Das Einschweißen des hochgestellten Randes 17 des Formteils 15 in den Innenraum der U-Profile am Rand der Innenschalen 27 und 29 des zugeordneten Längsholms 11 bzw. 13 und das Verschweißen des zurückgesetzten Randes 18 des Formteils 15 mit der Rückseite des Schalenbodens der zugeordneten Innenschalen 27, 29 ergibt eine in sich verzahnte Struktur besonders hoher Verwindungssteifigkeit.

**Patentansprüche**

1. Fahrzeugsitz mit einem Sitzrahmen, der zwei in Längsrichtung verlaufende Längsholme (11, 13) sowie zwei diese Längsholme (11, 13) im Bereich ihres vorderen beziehungsweise hinteren Endabschnittes miteinander verbindende Querholme besitzt, wobei die beiden Längsholme (11, 13) je in Form eines aus zwei miteinander verbundenen Blechschalen (23, 27 ; 25, 29) bestehenden Hohlkastenprofils ausgebildet sind, der hintere Querholm (16) ein Hohlprofilstab ist und der vordere Querholm aus einem aus Blech bestehenden Formteil (15) gebildet ist, dadurch gekennzeichnet, daß der hintere Querholm ein kreiszylindrisches Rohr (16) ist und der vordere Querholm durch ein einziges Blechformteil (15) gebildet ist, das als nach oben gewölbte Blechplatte gestaltet ist.

2. Fahrzeugsitz nach Anspruch 1, dadurch gekennzeichnet, daß der rückwärtige Teil der den vorderen Querholm bildenden Blechplatte eine nach hinten und unten geneigt verlaufende Auflagefläche (14) für den zugehörigen Polsterträger bildet.

3. Fahrzeugsitz nach Anspruch 1 oder 2, dadurch gekennzeichnet, daß die als Außenschale (23 ; 25) dienende erste Schale des Hohlkastenprofils des Längsholms (11 ; 13) als Schalenboden eine im wesentlichen ebene Wandung (31 ; 33) aufweist, deren Rückseite die in einer Vertikalebene liegende äußere Breitseite des Längsholms (11 bzw. 13) bildet, und daß der Schalenboden von einem nach einwärts gebogenen, durchgehenden Rand (41 ; 42 und 38 ; 40) eingefaßt ist, mit dem die als Innenschale (27, 29) des Hohlkastenprofils dienende zweite Schale in Verbindung ist.

4. Fahrzeugsitz nach Anspruch 3, dadurch gekennzeichnet, daß die Innenschale (27, 29) als Schalenboden, der die parallel zum Schalenboden der Außenschale (23, 25) verlaufende innere Breitseite des Längsholms (11 bzw. 13) bildet, eine im wesentlichen ebene Wandung (45, 46) aufweist, die von abgebogenen Rändern (47 ; 49 und 50 ; 51) seitlich eingefaßt ist, welche mit dem Rand (41 ; 42 und 38 ; 40) der Außenschale (23 bzw. 25) verbunden sind.

5. Fahrzeugsitz nach Anspruch 4, dadurch gekennzeichnet, daß der untere Rand (47 ; 49) der Innenschale (27 bzw. 29) gegen das Innere des Sitzrahmens hin nach einwärts und der seitliche und obere Rand (50 ; 51) der Innenschale (27 bzw. 29) nach auswärts gebogen sind und daß der nach einwärts abgebogene Rand (38 ; 40) an der Unterseite der Außenschale (23 bzw. 25) auf zumindest einem Teil seiner Länge wesentlich breiter ist als die Tiefe der Innenschale (27 bzw. 29) und zusammen mit der auf seiner Oberseite aufliegenden Unterseite des unteren Randes (47 ; 49) der Innenschale (27 bzw. 29) eine nach einwärts vorspringende, verstärkte Befestigungsleiste (43 ; 44) bildet, über die der Sitzrahmen mit dem Fahrzeugboden verbindbar ist.

6. Fahrzeugsitz nach Anspruch 5, gekennzeichnet durch Befestigungslöcher (65, 66) in der durch die aneinanderliegenden Ränder (38 ; 40 und 47 ; 49) der beiden Schalen (23, 25 und 27, 29) gebildeten Befestigungsleiste (43 ; 44) und durch von der Rückseite her in den Schalenboden der Innenschale (27, 29) eingedrückte Mulden (69, 70) im Zugangsbereich der Befestigungslöcher (65, 66).

7. Fahrzeugsitz nach Anspruch 6, dadurch gekennzeichnet, daß der seitliche und obere Rand (50 ; 51) der Innenschale (27, 29) in seinem Endbereich zur Bildung eines nach einwärts geöffneten U-Profils (53 ; 55) nach einwärts zurückgebogen ist und daß der Steg (57 ; 59) des U-Profils (53 bzw. 55) an der Innenseite der Wandung (31 ; 33) des Schalenbodens der Außenschale (23 bzw. 25) und der äußere Schenkel (61 ; 63) des U-Profils (53 bzw. 55) mit seiner Außenseite an der Innenseite des seitlichen und oberen Randes (41 ; 42) der Außenschale (23 bzw. 25) anliegt.

8. Fahrzeugsitz nach Anspruch 7, dadurch gekennzeichnet, daß der vordere Querholm (15) für die Verbindung mit den Längsholmen (11, 13) abgebogene Ränder (17, 18) besitzt, die bei zusammengebautem Sitzrahmen an der Innenfläche des Steges (57 ; 59) des U-Profils (53 bzw. 55) am Rand (50 ; 51) beziehungsweise der Rückseite der Wandung (45 bzw. 46) des Schalenbodens der Innenschale (27 bzw. 29) des zugeordneten Längsholms (11 bzw. 13) anliegen.

9. Fahrzeugsitz nach einem der Ansprüche 1 bis 8, dadurch gekennzeichnet, daß die Blechteile durch Verschweißen aneinander befestigt sind.

**Claims**

1. Vehicle seat with a seat frame comprising two longitudinal spars (11, 13) extending in a longitudinal direction and, connecting these longitudinal spars (11, 13) to each other in the region of their front and respectively rear end portions, two transverse spars, the two longitudinal spars (11, 13) each being constructed in the form of a hollow box section consisting of two connected-together sheet metal shells (23, 27 ; 25, 29), the rear transverse spar (16) being a hollow profiled bar while the front transverse spar consists of a sheet metal shaped part (15), characterised in that the rear transverse spar is a circularly cylindrical tube (16), the front transverse spar being constituted by a single sheet metal shaped part (15) which takes the form of an upwardly bulging sheet metal plate.

2. Vehicle seat according to Claim 1, characterised in that the rearward part of the sheet metal plate which forms the front transverse spar forms a rearwardly and downwardly inclined supporting surface (14) for the associated padding carrier.

3. Vehicle seat according to Claim 1 or 2, characterised in that the first shell of the hollow box section of the longitudinal spar (11 ; 13) which serves as an outer shell (23 ; 25) has as the shell bottom a substantially flat wall (31 ; 33), the back of which forms, located in a vertical plane, the outer broad side of the longitudinal spar (11, 13) and in that the shell bottom is enclosed by an inwardly bent continuous edge (41 ; 42 and 38 ; 40) to which is connected the second shell which serves as the inner shell (27, 29) of the hollow box section.

4. Vehicle seat according to Claim 3, characterised in that the inner shell (27, 29) has as the bottom of the shell, which forms the inner broad side of the longitudinal spar (11, 13) which extends parallel with the bottom of the outer shell (23, 25), a substantially plane wall (45, 46) which is enclosed at the side by the bent-over edges (47 ; 49 and 50 ; 51) which are connected to the edge (41, 42 and 38, 40) of the outer shell (23, 25).

5. Vehicle seat according to Claim 4, characterised in that the bottom edge (47 ; 49) of the inner shell (27, 29) is bent inwardly towards the interior of the seat frame while the lateral and upper edge (50, 51) of the inner shell (27, 29) is bent outwardly and in that the inwardly bent-over edge (38 ; 40) is on the underside of the outer shell (23, 25) and over at least a part of its length substantially wider than the depth of the inner shell (27, 29) and, together with the underside of the lower edge (47 ; 49) of the inner shell (27, 29) which rests on its upper face, forms an inwardly projecting reinforced fixing strip (43 ; 44) through which the seat frame can be connected to the bottom of the vehicle.

6. Vehicle seat according to Claim 5, characterised by fixing holes (65, 66) in the fixing strip (43 ; 44) formed by the abutting edges (38 ; 40 and 47 ; 49) of the two shells (23, 25 and 27, 29) and by, in the access zone of the fixing holes (65, 66), depressions (69, 70) which are pressed into the bottom of the inner shell (27, 29) from the back.

7. Vehicle seat according to Claim 6, characterised in that the lateral and upper edge (50 ; 51) of the inner shell (27, 29) is in its end zone bent back inwardly to form an inwardly open U-shaped profile (53 ; 55) and in that the web (57 ; 59) of the U-shaped profile (53, 55) bears on the inside face of the wall (31 ; 33) of the bottom of the outer shell (23, 25) while the outer leg (61, 63) of the U-shaped profile (53, 55) has its outside face bearing on the inside face of the lateral and upper edge (41 ; 42) of the outer shell (23, 25).

8. Vehicle seat according to Claim 7, characterised in that the front transverse spar (15) has, for connection to the longitudinal spars (11, 13), bent-over edges (17, 18) which, when the seat frame is assembled, bear on the inside face of the web (57, 59) of the U-shaped profile (53, 55) on the edge (50, 51) and back respectively of the wall (45, 46) of the bottom of the inner shell (27, 29) of the associated longitudinal spar (11, 13).

9. Vehicle seat according to one of Claims 1 to 8, characterised in that the sheet metal parts are fixed to one another by being welded.

**Revendications**

1. Siège de véhicule comportant un cadre qui possède deux longerons (11, 13) courant dans la direction longitudinale ainsi que deux traverses reliant ces deux longerons (11, 13) l'un à l'autre, respectivement dans la zone de leur portion d'extrémité avant ou arrière, étant précisé que les deux longerons (11, 13) sont respectivement conçus sous forme d'un profil creux constitué de deux coques de tôle (23, 27 ; 25, 29) réunies l'une à l'autre, que la traverse arrière (16) est un profilé creux et que la traverse avant est constituée d'une pièce de forme (15) en tôle, caractérisé en ce que la traverse arrière est un tube cylindrique circulaire (16) et que la traverse avant est constituée d'une unique pièce de forme en tôle (15) réalisée sous la forme d'une plaque de tôle cintrée vers le haut.

2. Siège de véhicule selon la revendication 1, caractérisé en ce que la partie arrière de la plaque de tôle qui constitue la traverse avant présente une surface d'appui (14), qui court inclinée vers l'arrière et vers le bas, pour le porte-rembourrage correspondant.

3. Siège de véhicule selon la revendication 1 ou 2, caractérisé en ce que la première coque, servant de coque extérieure (23 ; 25), du profilé creux du longeron (11 ; 13) présente comme fond une paroi essentiellement plane (31 ; 33) dont la face arrière forme le grand côté extérieur, situé dans un plan vertical, du longeron (11 ou 13), et en ce que le fond de coque est bordé par un bord continu et replié vers l'intérieur auquel est réunie la seconde coque, servant de coque intérieure (27, 29) du profilé creux.

4. Siège de véhicule selon la revendication 3, caractérisé en ce que la coque intérieure (27, 29) présente comme fond qui forme le grand côté intérieur, courant parallèlement au fond de la coque extérieure (23, 25), du longeron (11 ou 13), une paroi essentiellement plane (45, 46) qui est bordée latéralement par des bords repliés (47 ; 49 et 50 ; 51) qui sont réunis avec le bord (41 ; 42 et 38 ; 40) de la coque extérieure (23 ou 25).

5. Siège de véhicule selon la revendication 4, caractérisé en ce que le bord inférieur (47 ; 49) de la coque intérieure (27 ou 29) est replié vers l'intérieur en direction de l'intérieur du cadre du siège et que le bord latéral et supérieur (50 ; 51) de la coque intérieure (27 ou 29) est replié vers l'extérieur, et en ce que le bord replié vers l'intérieur (38 ; 40), sur la face inférieure de la coque extérieure (23 ou 25), est, sur au moins une partie de sa longueur, sensiblement plus large que la profondeur de la coque intérieure (27 ou 29) et qu'il forme, avec la face inférieure, reposant sur sa propre face supérieure, du bord inférieur (47 ; 49) de la coque intérieure (27 ou 29), une bande de fixation renforcée (43 ; 44) qui vient en saillie vers l'intérieur et au moyen de laquelle on peut relier le cadre au plancher du véhicule.

6. Siège de véhicule selon la revendication 5, caractérisé par des trous de fixation (65, 66) dans la bande de fixation (43 ; 44) formée par les bords (38 ; 40 et 47 ; 49), appliqués l'un contre l'autre, des deux coques (23, 25 et 27, 29) et par des niches (69, 70) obtenues par enfoncement, depuis la face arrière, dans le fond de la coque intérieure (27, 29), dans la zone d'accès des trous de fixation (65, 66).

7. Siège de véhicule selon la revendication 6, caractérisé en ce que le bord latéral et supérieur (50 ; 51) de la coque intérieure (27, 29) est replié vers l'intérieur dans sa zone d'extrémité pour former un profil U ouvert vers l'intérieur (53 ; 55) ; et en ce que l'âme (57 ; 59) du profil U (53 ou 55) s'applique contre la face intérieure de la paroi (31 ; 33) du fond de la coque extérieure (23 ou 25) et que l'aile extérieure (61 ; 63) du profil U (53 ou 55) s'applique, par sa face extérieure, contre la face intérieure du bord latéral et supérieur (41 ; 42) de la coque extérieure (23 ou 25).

8. Siège de véhicule selon la revendication 7, caractérisé en ce que la traverse avant (15) possède, pour la liaison avec les longerons (11, 13), des bords repliés (17, 18) qui, lorsque le cadre du siège est assemblé, s'appliquent contre la surface intérieure de l'âme (57 ; 59) du profil U (53 ou 55), contre le bord (50 ; 51) ou contre la face arrière de la paroi (45 ou 46) du fond de la coque intérieure (27 ou 29) du longeron correspondant (11 ou 13).

9. Siège de véhicule selon l'une des revendications 1 à 8, caractérisé en ce que les pièces de tôle sont fixées l'une contre l'autre par soudure.

0 065 116

# Fig.1.

# Fig.2.

# Fig.3.

1

Fig.4.

Fig.5.

Fig.6.

Fig.7.